# EUROPEAN PATENT SPECIFICATION

(11) **EP 0 469 706 B1**
(45) Date of publication and mention of the grant of the patent: **17.01.1996**
(21) Application number: 91305238.7
(22) Date of filing: 11.06.1991
(51) Int. Cl.: G11B 27/30

(54) **Method and means for index pulse generation in a data storage system**
Verfahren und Mittel zur Erzeugung von Indexpulsen in einem Datenspeicherungssystem
Méthode et moyens de génération d'impulsions d'indexage dans un système de stockage de données

(30) Priority: 31.07.1990 US 560438
(43) Date of publication of application: 05.02.1992
(73) Proprietor: SEAGATE TECHNOLOGY INTERNATIONAL, Georgetown Grand Cayman Island (KY)
(72) Inventor: Miller, Jeffrey Alan, Santa Cruz, CA 95060 (US)
(74) Representative: Sturt, Clifford Mark

(56) References cited:
- WO-A-90/03644
- GB-A- 2 081 957
- PATENT ABSTRACTS OF JAPAN vol. 14, no. 169 (P-1032), 30 March 1990

## Description

The present invention relates to index pulse generation in data storage systems.

In a magnetic data storage system, such as a computer disk drive, digital information is magnetically stored upon a surface of a magnetic medium such as a magnetic storage disk. The digital information is represented by selectively polarising the magnetic field of consecutive areas across the surface of the magnetic disk. When this information is read back from the storage disk, the magnetic polarisation of the medium is sensed and converted to an electrical output signal. The read and write operations are performed by a magnetic read/write head which "flies" over the surface of the rotating disk and provides an output signal.

Typically, storage disks of a disk drive are stacked in a "disk pack". Each side of each disk in the pack is used to store information. Each side of each disk in the pack has at least one magnetic head responsible for reading and writing information on that particular surface. Typically, all the magnetic heads move in tandem radially over the surfaces of the disks so that they are all at the same disk radius at the same time. A "cylinder" identifies the set of specific tracks on the disk surfaces in the disk pack which lie at equal radii and are, in general, simultaneously accessed by the collection of heads. Each track within a cylinder is divided into frames or sectors for carrying data. A servo surface occupies one side of one of the disks in the pack and carries information used by a controller to, among other things, generate an index pulse when a specific frame ("the index frame") on the servo surface is detected. The information stored on the servo surface is used to locate the position of magnetic heads over the other disk surfaces in the pack. Data on the servo surface is used to locate sectors on the data carrying surfaces. The sectors are located with reference to the position of index marks on the servo surface.

Typically, prior art index generation methods involve the recognition of a specific non-zero index mark written only in the index frame, with a zero pattern written in all other servo frames.

The prior art index generation circuitry is highly susceptible to read back errors. Errors from a single frame can cause either.failure to detect index in the desired frame or false generation of index in an undesired frame.

These schemes are susceptible to both missing the desired index due to drop out of a bit (reading "zero" instead of "one") or bits in the non-zero index mark, and to falsely identifying an index in an undesired frame due to drop in (reading "one" instead of "zero") of bits in a pattern identical to the specific non-zero index mark. It would be highly desirable to provide a method and apparatus for generating index pulses which has a high level of error tolerance in the index information read back from the servo surface.

WO-A-90-03644 discloses a fault tolerant index scheme. In WO-A-90-03644, the servo pattern includes two occurrences of a twelve bit pattern chosen to limit the amplitude of the side lobes of an autocorrelation plot of the pattern with a template of the pattern. Initially, the entire servo pattern on a servo track is detected in sequence at the servo frame bit rate. Each twelve bit sequence of bits is compared continually to a fixed image, or template of the servo pattern, and the number of bits whose position and value ("1" or "0") match the template are determined. Whenever a threshold level (less than the total number of bits in the pattern) of agreements takes place it is assumed that the index has been detected.

The present invention provides for tolerance to errors in index mark information read back from a servo surface of a magnetic disk pack. With the present invention, a correct index pulse may be generated even if a large number of index information bits are improperly read from the servo surface.

The present invention identifies one particular servo frame on a given cylinder, called the index frame, with a very high degree of accuracy. The invention increases the probability that the desired index frame is recognised and decreases the probability that an undesired frame is falsely identified as an index frame.

According to one aspect of the invention, therefore, there is provided a method of generating an index pulse in a data storage system having a storage surface, comprising recording on the storage surface an incrementing or decrementing sequence of non-zero codes, reading data from the storage surface, counting the number of successive non-zero codes so read, comparing non-zero codes so read with the previously read code for a match in increment or decrement, counting the number of correct matches, and initiating the generation of an index pulse when the number of successive non-zero codes reaches a pre-determined count and the number of matches exceeds a selected count lower than the pre-determined count.

Preferably, the sequence is a continuous incremental sequence of non-zero codes between zero code locations. Advantageously, there are 2ⁿ - 1 non-zero codes, where n is an integer greater than one and conveniently three. The non-zero codes are based upon the position of the code within the sequence, preferably by a binary representation of the number. Such a representation may have redundant digits added to increase the error tolerance.

From another aspect, the invention provides an apparatus for generating an index pulse in a data storage system having a storage surface which carries index marks coded with an index code made of an incrementing or decrementing sequence of non-zero codes, comprising means for reading data including said sequence of non-zero codes from the storage surface, index mark generation means, means connected to the index mark generation means for detecting said sequence, a counter for counting the number of successive non-zero codes read, a comparator connected to the counter and to the index mark generation means for comparing the output of the counter with the generated index code and for producing a match output representative of a total number of matches of non-zero codes with the counter output, counting means for counting the number of correct matches, and means for generating an index pulse when the number of successive non-zero codes reaches a predetermined count and the number of matches exceeds a selected count lower than the predetermined count.

In one embodiment of the invention, the apparatus for generating an index pulse in a magnetic storage system, comprises a read back sensor which provides a data signal output, a non-zero frame counter connected to the read back sensor for counting data frames in the data signal output which carry a non-zero code and for producing a non-zero frame count representative of a count of non-zero data frames in the data signal output, a match comparator connected to the read back sensor and the non-zero frame counter for comparing the non-zero frame count with a value of the non-zero code carried in data frames and for producing a match comparator output representative of an occurrence of a match between the non-zero frame count and the value of the non-zero code, a match counter connected to the match comparator for counting matches between the non-zero frame count and value of the non-zero code and for providing a match counter output representative of the number of matches between the non-zero frame count and the value of the non-zero code, a match counter comparator connected to the match counter for comparing the match counter output with a pre-determined minimum match value, and for providing a match counter comparator output representative of an occurrence of the number of matches exceeding the minimum match value, a non-zero frame counter comparator connected to the non-zero frame counter for comparing the non-zero frame count with a pre-determined non-zero frame count value, and for providing a non-zero frame counter comparator output representative of an occurrence of the non-zero frame count equalling the pre-determined non-zero frame count value; and an index pulse generator connected to the match counter and the non-zero frame counter comparator for providing an index pulse generator output which carries index pulses.

Advantageously, the apparatus includes a five-to-three decoder coupled to the read back sensor and the non-zero counter. Conveniently, the apparatus includes a one detector coupled to the read back sensor for identifying non-zero data frames and for providing a one detector output representative of non-zero data frames. The apparatus may include a re-set circuit connected to the index pulse generator, the non-zero frame counter and the match counter.

The non-zero frame counter comparator may include a present data frame storage register coupled to the read back sensor for storing a present data frame value, a previous data frame register coupled to the present data frame storage register for storing a previous data frame value, and a comparator coupled to the present data frame storage register and the previous data frame storage register for comparing the present data frame value with one plus the previous data frame value.

The apparatus may include up-date means connected to the non-zero frame counter comparator for up-dating the non-zero frame counter. In this case, the up-date means may comprise a plus-one adder and means for comparing the present data frame value with the previous data frame value plus-one and for loading the non-zero frame counter with an up-date value.

The invention may also be considered as a disk drive comprising a disk for storing data, the disk including data tracks on which stored information and servo data is recorded, the servo data including a plurality of recorded non-zero codes in a pre-determined sequence leading to and including a code representative of an index mark, means for reading the servo data and producing a servo read signal, and means responsive to the servo read signal for detecting the pre-determined sequence and producing an index pulse output.

The disk drive may further comprise means for positioning the disk relative to the means for reading as a function of the servo read signal, conveniently in the form of an actuator.

The means for detecting the pre-determined sequence and producing an index pulse output may comprise means coupled to the means for reading the servo data for detecting an incrementing sequence of non-zero codes, means coupled to the data reading means for detecting a code representative of a location of an index mark and for producing an index mark output; and means coupled to the sequence detecting means and the code location detecting means for producing the index pulse output.

There may also be a counter for counting non-zero codes and providing a count output representative of a total number of non-zero codes, and a comparator connected to the counter and to the code location detecting means for comparing the output of the counter with the output of the code location detecting means and producing a match output representative of a total number of matches of non-zero codes with the count output.

In such case, there may further be a count comparing means for comparing the count output with a pre-determined count value and for comparing the match output with a pre-determined minimum match value. Such a count comparing means may include means for producing an index pulse output when the count output equals the pre-determined count and the match output is greater than or equal to the pre-determined minimum match value.

Preferably, means is provided for re-setting the means for detecting a pre-determined code.

The invention can alternatively be considered as a disk drive comprising a plurality of disks for storing data, at least one disk including a servo surface on which servo tracks are recorded, the servo tracks including a plurality of recorded non-zero codes in a pre-determined sequence leading to a code representative of a location of an index mark, means for reading the servo tracks and producing a servo read signal, and means responsive to the servo read signal for detecting the pre-determined sequence and producing an index pulse output upon reading of the code representative of a location of an index mark.

The disk drive may further comprise a plurality of read/write heads for reading data from and writing data to the plurality of disks, means for positioning the plurality of read/write heads as a function of the servo read signal, and means for controlling operation of the read/write heads as a function of the index pulse output. The means for positioning the plurality of read/write heads may comprise an actuator.

The means for detecting the pre-determined sequence and producing an index pulse output may comprise means coupled to the servo track reading means for detecting an incrementing sequence of non-zero codes, means coupled to the reading means for detecting a code representative of a location of an index mark and for producing an index mark output, and means coupled to the sequence detecting means and the code location detecting means for producing the index pulse output.

In such case, there may also be a counter for counting non-zero codes and providing a count output representative of a total number of non-zero codes, a comparator connected to the counter and the code location detecting means for comparing the output of the counter with the output of the code location detecting means and producing a match output representative of a match of a non-zero code with the count output, and a match counter connected to the comparator for counting a number of match outputs. Such may further include a count comparing means for comparing the count output with a pre-determined count value and for comparing the match output with a pre-determined minimum match value. Then the count comparing means may include means for producing an index pulse output when the count output equals the pre-determined count value and the match output is greater than or equal to the pre-determined minimum match value. Means may be provided for re-setting the means for detecting a pre-determined code.

The described embodiment of the present invention uses an incrementing sequence of non-zero codes, with redundancy, written in a number of frames immediately preceding, leading up to, and including the desired index frame. All other frames on the cylinder are written with a zero code. The exact number of non-zero frames and the number of dedicated servo information bits per frame can vary based upon the specific application and the level of error tolerance required. An index generation decode logic circuit maintains a count of non-zero frames and generates the index mark at the desired count, provided that a required minimum number of "matches" or exact correspondences between the frame counter value and the actual decoded frame value is met or exceeded. Error tolerant logic uses memory of previous frame decodes to adaptively up-date or re-set the counter to the most likely position in the non-zero frame sequence.

In a preferred embodiment of the present invention, the non-zero data recorded on the servo surface is a five-bit pattern given by the three-bit binary representation of one to seven with additional repetition redundancy of the two least significant bits. The order of the bits is re-arranged to give maximum separation of the repeated bits.

The invention will be described further, by way of example, with reference to the accompanying drawings, in which:-
Figure 1 shows a magnetic disk storage system to which the invention is applicable;
Figure 2 is a flow chart for an error tolerant index generation apparatus in accordance with the present invention;
Figures 3A and 3B are logic diagrams of error tolerant index pulse generation circuitry made in accordance with the present invention; and
Figures 4 to 7 are logic diagrams of parts of the circuitry of Figures 3A and 3B.

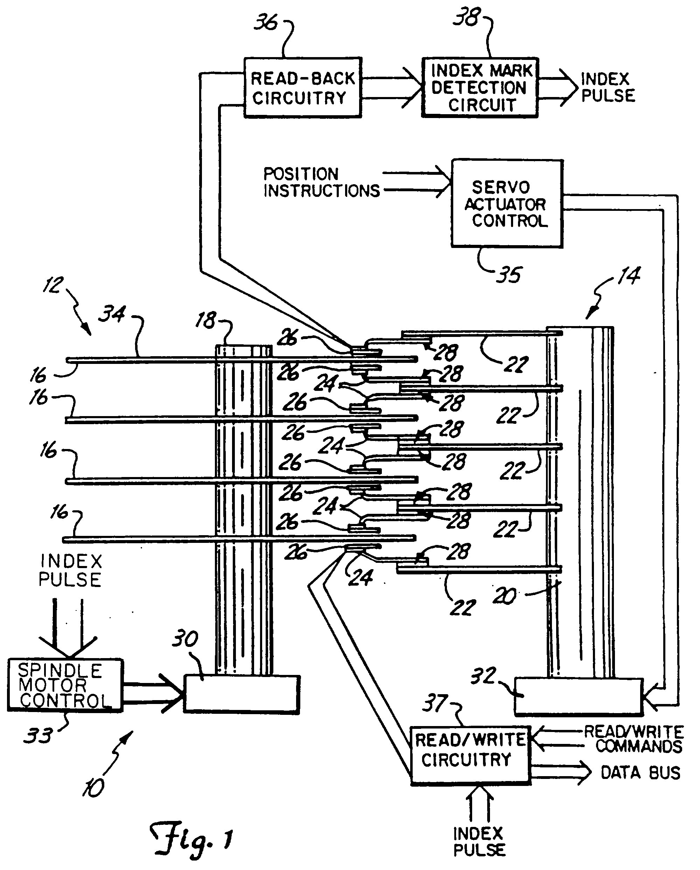

A disk assembly 10 (Figure 1) comprises a disk pack 12 and E-block assembly 14. Disk pack 12 comprises disks 16 stacked on a drive spindle 18. A spindle motor 30 is coupled to drive spindle 18. A spindle motor control circuit 33 controls spindle motor 30. E-block assembly 14 comprises a servo spindle 20 and a plurality of support arms 22. Each support arm carries one or two flexure arms 24. Each flexure arm 24 carries a magnetic head assembly 26 by means of a mount 28. An actuator 32 is coupled to servo spindle 20. A servo actuator control 35 receives position instructions and connects to actuator 32. A servo surface 34 comprises one surface of one of the disks 16 in the disk pack 12. Read back circuitry 36 connects to the one magnetic head 26 which is responsible for reading and writing information on servo surface 34. Read back circuitry 36 connects to index mark detection circuit 38. Each of the other magnetic heads 26 has associated read/write circuitry 37 which receives read/write commands and connects to a data bus for carrying information during reading and writing operations. Index mark detection circuit 38 provides an index pulse output to spindle motor control 33 and to read/write circuitry 37.

In operation, motor 30 rotates drive spindle 18, which causes disks 16 to rotate in unison. Actuator 32 moves servo spindle 20 so that magnetic heads 26 move between tracks on disks 16. Read back circuitry 36 converts a raw data signal from magnetic head 26 over servo surface 34 into digital pulses. The output of read back circuitry 36 drives index mark detection circuit 38. Index mark detection circuit 38 uses an error tolerant index generation scheme in accordance with the present invention to provide an index pulse output. Servo actuator control 35 receives position instructions and uses this information to control actuator 32. Spindle motor control circuit 33 receives index pulse information from index mark detection circuit 38 and controls spindle motor 30. Read/write circuitry 37 receives information from a data bus and writes it onto surfaces, other than surface 34, of disks 16 through magnetic heads 26. Read/write circuitry 37 is also used for reading information from the surface of disks 16 and providing information to the data bus. Read/write circuit 37 writes data as a function of read/write commands and index pulse information.

The present invention uses an incrementing sequence of non-zero codes, with redundancy, written in a number of data frames immediately preceding, leading up to, and including the index frame on servo surface 34. All other frames on surface 34 are written with a zero code. The exact number of non-zero frames and the number of dedicated servo information bits per frame can vary based upon the specific application and the required level of error tolerance. In addition, various parameters in the decoding algorithm can be set to provide for different combinations of error tolerance and resistance to false index pulse generation.

In a preferred embodiment of the present invention, each of the data frames on servo surface 34 is written with five bits of index information. All frames, except for the index frame itself and the six frames leading up to the index frame, are written with logical zeros in all five of the bit locations (00000). Starting with the sixth frame before the index frame, a non-zero pattern is written which corresponds to that frame's position in a sequence counting from one to seven, with one corresponding to the sixth frame before the index frame and seven corresponding to the index frame itself. The five bits of the non-zero patterns are written as three-bit binary representations of decimal one to seven, with the addition of repetition redundancy in the two least significant bits. The order of the bits is re-arranged to give maximum separation of each of the repeated bits.

For example, if the three-bit binary representation is given in order from the most significant bit to least significant bit as "CBA", addition of redundancy on the least significant bits gives "CBBAA". These bits are re-arranged to form "ABCAB". Thus, the following patterns are written:

| Location | Decimal | 3 bit binary | 5 bit pattern |
|---|---|---|---|
| six before index | 1 | 001 | 10010 |
| five before index | 2 | 010 | 01001 |
| four before index | 3 | 011 | 11011 |
| three before index | 4 | 100 | 00100 |
| two before index | 5 | 101 | 10110 |
| one before index | 6 | 110 | 01101 |
| index | 7 | 111 | 11111 |
| elsewhere | 0 | 000 | 00000 |

This data coding scheme increases the reliability of decoded data read back from the servo surface.

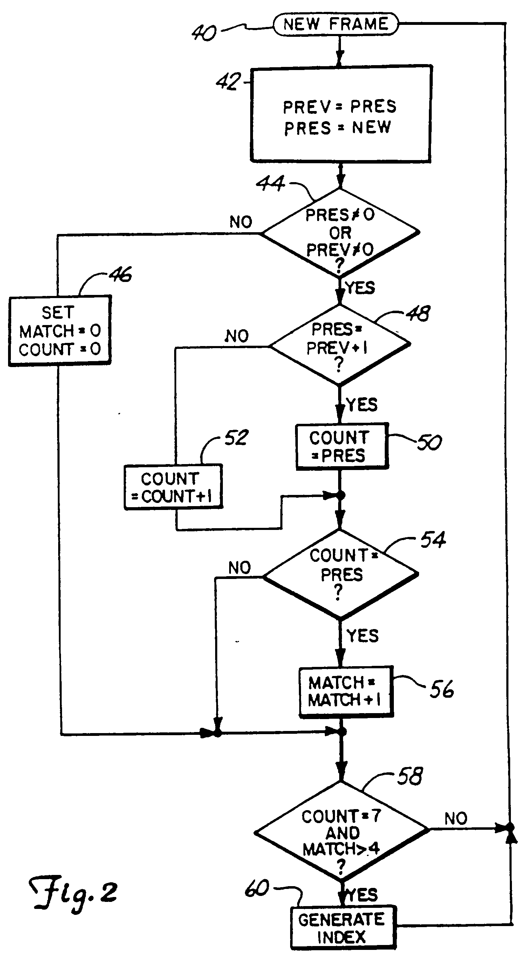

Figure 2 is a flow chart of an index generation algorithm in accordance with the present invention. The algorithm starts at 40 in Figure 2 with the five to three decode of a new data frame read from servo surface 34. At block 42 in the flow chart, decoded data from the previous servo frame is stored in a variable called PREV and newly decoded data is stored in a variable named PRES. At 44, PRES and PREV are compared with zero. If both variables equal zero, control is transferred to block 46 in the flow chart of Figure 2. If either PRES or PREV are non-zero, block 44 passes control to block 48. Block 48 compares the value of PRES with the value of PREV plus one. If PRES equals PREV plus one, block 44 passes control to block 50. If PRES does not equal PREV plus one, block 48 passes control to block 52. Block 50 sets a variable named COUNT to equal PRES and passes control to block 54.

If control is passed through block 52, COUNT is set to equal COUNT plus one and control is passed to block 54. In block 54, the value of COUNT is compared to the value of PRES. If COUNT equals PRES, control is passed to block 56. If COUNT does not equal PRES, control is passed directly to block 58 and block 56 is by-passed. In block 56, a variable named MATCH is set to equal MATCH plus one and passes control to block 58. If control is passed to block 58 via block 46, then in block 46, the variable MATCH is set to equal zero and the variable COUNT is set to equal zero. In block 58, if COUNT equals seven and if MATCH is greater than four, control is passed to block 60. Block 60 generates an index pulse. Otherwise, block 58 returns control to the beginning of the algorithm in block 40 which waits for the next frame to be received.

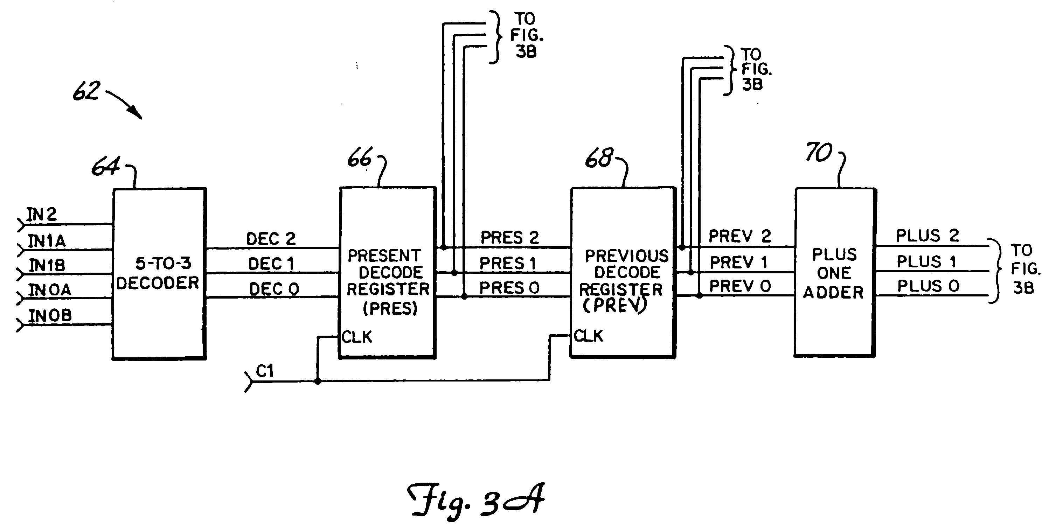

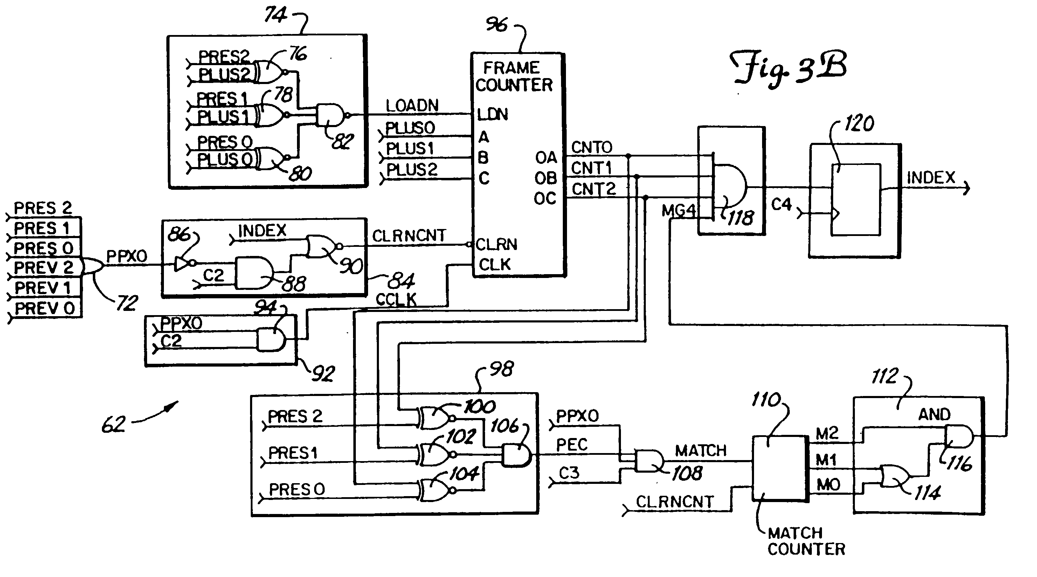

The algorithm can be implemented in hardware as shown in Figures 3A and 3B. The five-bit digital code is input to index mark generation circuit 62 forming part of index mark detection circuit 38, on data lines labelled IN2, IN1A, IN1B, IN0A, and INOB (Figure 3A). Data lines IN1, IN1A, IN1B, INOA AND INOB are connected to a five-to-three decoder 64 which provides an output on-lines DEC2, DEC1 and DEC0 to present decode register (PRES) 66. Register 66 includes a clock input CLK connected to first clock data line C1, and provides an output on data lines PRES2, PRES1, and PRES0 into a previous decode register (PREV) 68. Register 68 provides an output on data lines PREV2, PREV1, and PREV0 to plus one adder 70 which provides an output on data lines PLUS2, PLUS1 and PLUS0.

An OR gate 72 (Figure 3B) receives inputs from the PRES2, PRES1, PRES0, PREV2, PREV1 and PREV0 data lines, and provides an output on data line PPXO. A comparator 74 comprises XNOR gates 76, 78 and 80 and NAND gate 82. XNOR gate 76 receives input from data lines PRES2 and PLUS2 and provides an output to NAND gate 82. XNOR gate receives input from the PRES1 and PLUS1 data lines and provides an output to NAND gate 82. XNOR gate 80 connects to data lines PRES0 and PLUS0 and provides an output to NAND gate 82. The comparator 74 compares PRES with PREV plus one and provides an output on data line LOADN.

A counter clear logic circuit 84 comprises inverter 86, AND gate 88 and NOR gate 90. Inverter 86 receives input on data line PPXO from OR gate 72 and provides an output to AND gate 88. AND gate 88 also receives a clock input on second clock data line C2. AND gate 88 provides an output to NOR gate 90. NOR gate 90 also receives an input on a data line INDEX and provides an output on a data line CLRNCNT.

An up-date frame counter logic circuit 92 comprises an AND gate 94 with inputs from the data line PPXO and the second clock data line C2. AND gate 94 provides a clocked output on data line CCLK. A frame counter 96 comprises a 3-bit binary up counter with synchronous load and asynchronous clear. Frame counter 96 receives input from the LOADN, PLUS0, PLUS1, PLUS2, CLRNCNT, and CCLK data lines. Data output from frame counter 96 is carried by data lines CNT0, CNT1 and CNT2.

A comparator 98 performs a comparison between the present variable (PRES) and COUNT. Comparator 98 comprises XNOR gates 100, 102, 104 and AND gate 106. XNOR gate 100 receives inputs from data lines CNT0 and PRES2; XNOR gate 102 receives inputs from data lines CNT1 and PRES1; and XNOR gate 104 receives inputs from data lines CNT2 and PRESO. The outputs from XNOR gates 100, 102 and 104 are the inputs to AND gate 106 whose output is on data line PEC. An AND gate 108 receives inputs from data lines PEC and PPXO and from a third clock data line C3, and provides an output on data line MATCH. A match counter 110 receives inputs from the data line MATCH and the data line CLRNCNT and provides a numerical output on data lines M2, M1 and M0 to a decoder 112. Decoder 112 provides a MATCH-greater-than-four decoder and comprises OR gate 114 and AND gate 116. OR gate 114 receives input from data lines M0 and M1. AND gate 116 receives input from OR gate 114 and data line M2 and provides an output on data line MG4.

AND gate 118 comprises a COUNT equals seven and MATCH-greater-than-four detector. AND gate 118 connects to data lines MG4, CNT0, CNT1 and CNT2 and provides an output to an index generation register 120. Index generation register 120 is a flip-flop which receives clock pulses from a fourth clock data line C4 and provides an output on a data line INDEX.

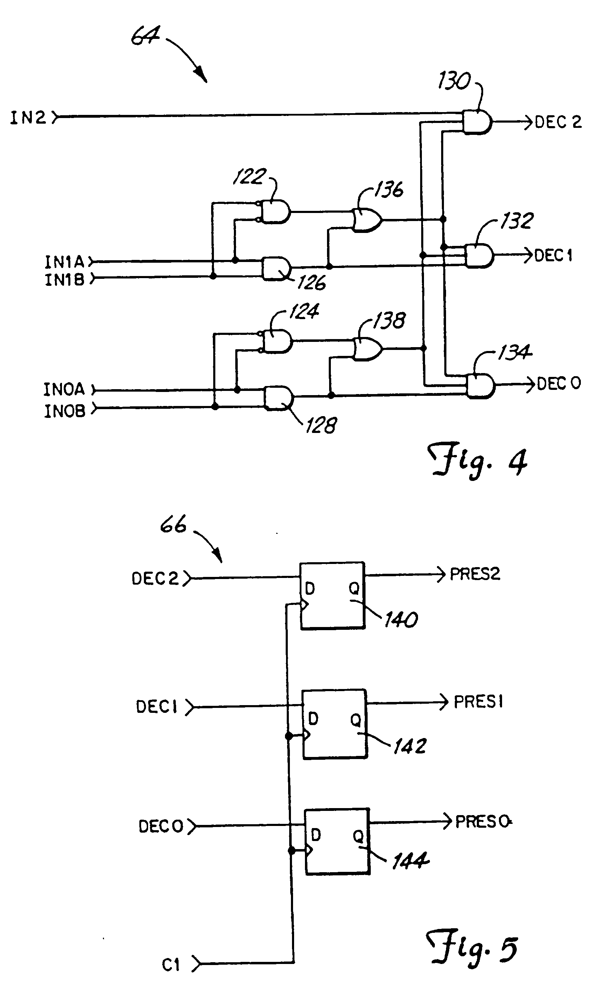

Five-to-three decoder (Figure 4) comprises NAND gates 122 and 124, AND gates 126, 128, 130, 132 and 134 and OR gates 136 and 138. Five-to-three decoder 64 receives binary input on data lines IN2, IN1A, IN1B, INOA and INOB and provides outputs on data lines DEC2, DEC1 and DEC0. NAND gate 124 and AND gate 128 receive inputs from data lines INOA and INOB and provide outputs to OR gate 138. In addition, the ouput of AND gate 128 passes to AND gate 134 as one of three inputs thereto. NAND gate 122 and AND gate 126 receive inputs from data lines IN1A and IN1B and provide outputs to OR gate 136. In addition, the output of AND gate 126 passes to AND gate 132 as one of three inputs thereto. AND gate 130 receives inputs from data line IN2 and the outputs of OR gates 136 and 138. AND gate 132 receives inputs from the outputs of OR gates 136 and 138 and of AND gate 126. AND gate 134 receives inputs from the outputs of OR gates 136 and 138 and of AND gate 128. Five-to-three decoder 64 converts from a binary representation to a three bit binary representation.

Present decode register 66 (Figure 5) comprises D-type flip-flops 140, 142 and 144, each of which receives an input from first clock data line C1. Register 66 latches the inputs on DEC2, DEC1 and DEC0 data lines onto output data lines PRES2, PRES1 and PRES0. Previous decode register 68 is similar.

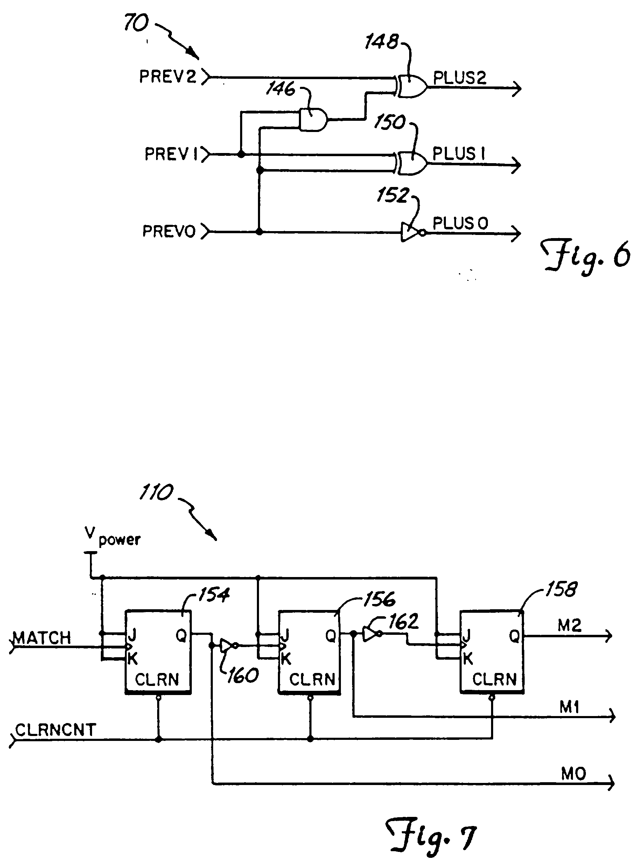

Plus one adder 70 (Figure 6) comprises AND gate 146, XOR gates 148 and 150 and inverter 152. Adder 70 receives input from data lines PREV2, PREV1 and PREV0 and provides an output on data lines PLUS2, PLUS1 and PLUS0. AND gate 146 receives inputs from data line PREV1 and PREV0 and provides an output to XOR gate 148 whose other input is from data line PREV2. XOR gate 150 receives inputs from data lines PREV1 and PREV0 and inverter 152 receives input from data line PREV0. The outputs of XOR gate 148, XOR gate 150 and inverter 152 are on data lines PLUS2, PLUS1 and PLUS0, respectively.

Match counter 110 (Figure 7) comprises JK flip-flops 154, 156 and 158 and inverters 160 and 162. Match counter 110 provides a binary representation on data lines M2, M1 and MO of the number of digital pulses on the input data line MATCH. Match counter 110 is re-set by a pulse on data line CLRNCNT. Flip-flop 154 has input from data line MATCH and output on data line M0, which is also taken through inverter 160 as input to flip-flop 156. The output of flip-flop 156 is on data line M1 and is also taken through inverter 162 as input to flip-flop 158 whose output is on data line M2.

The index mark generation circuit (Figures 3A and 3B) implements the algorithm of the flow chart shown in Figure 2. The circuit requires four sequential clock edges on data lines C1, C2, C3 and C4 to perform the algorithm. The timing of the edges is not critical as long as there is enough separation in time to allow for propagation delays. The logic operates as follows:
(1) Prior to the occurrence of a clock pulse on data line C1, the five servo index information bits on data lines IN2, IN1A, IN1B, IN0A and IN0B are read from the servo surface of the disk.
(2) The five bit pattern is decoded to three bits using the logic of five-to-three decoder 64. The rules for this five-to-three decode are as follows:
   (a) if (A=D) and (B=E) then output the three bits as (CBA).
   (b) if (A<>D) or (B<>E), then output the three bits as (000).
(3) On the occurrence of the clock pulse on data line C1, the value of the previous three-bit decode is moved to the previous decode register 68 and the present decode is stored in the present decode register 66.
(4) The present and previous decode values are tested to see if either decode is non-zero by the OR gate 72 which forms a one detector. If either the present or the previous value is non-zero, then the bit on data line PPXO (present or previous decode not zero) is set.
(5) The value of the previous decode plus one is calculated by the plus one adder block 70.
(6) The value of the present decode is compared to the value of the previous decode plus one by comparator 74.
(7) On the occurrence of a clock pulse on data line C2, if the data line PPX0 is not set, then both the frame counter 96 and the match counter 110 are cleared.
(8) If the data line PPX0 bit is set, and the present decode value equals the previous decode plus one, then the frame counter 96 is loaded with this present decode value. If the values are not equal, then the frame counter 96 is incremented by one.
(9) The present decode value is compared with the frame counter value by comparator 98. If the two are equal, the data line PEC (present equals count) is set.
(10) On the occurrence of a clock pulse on data line C3, if the data lines PEC and PPX0 are set, match counter 112 is incremented by one.
(11) If the value of match counter 112 is greater than four then data line MG4 is set.
(12) If the frame counter 96 value is seven and the data line MG4 is set, then AND gate 118 will set the input to flip-flop 120.
(13) On the occurrence of a clock pulse on data line C4, if the input to flip-flop 120 is set, then an index pulse will be provided as an output on the data line INDEX.
(14) If an index pulse is generated, then counter clear logic circuit 84 causes frame counter 96 and match counter 110 to be cleared.

The present invention provides an error tolerant method and apparatus for locating index marks and producing index pulses in a magnetic storage system. The invention uses an incrementing sequence of non-zero codes written immediately preceding, leading up to, and including a desired index frame. A logic circuit maintains a count of the non-zero codes read from a servo surface in a magnetic storage system and generates an index pulse. The invention uses an encoding scheme to further improve the error tolerance. In the preferred embodiment described, five bits are used. The first three bits are the binary representations of decimal one to seven. The additional two bits are for repetition redundancy of the two least significant bits. The order of the bits is re-arranged to give maximum separation of the repeated bits.

The present invention includes error tolerant index pulse generation in a data storage system in which servo data frames share a disk surface with standard, non-servo data frames (i.e. embedded servo applications). In another embodiment, error tolerant circuitry maintains a count of non-zero codes encountered and generates an index pulse provided that a maximum allowable number of discrepancies between the count and the actual present decode has not been exceeded.

It will be appreciated that the codes in the locations on either side of the non-zero code locations are zero codes. It is conceivable that more than one index mark location occurs in a track, but with a distinguishable sequence of non-zero codes. Thus one sequence could be an incrementing sequence 1, 2, 3, 4, 5, 6 and 7 and the other a decrementing sequence 7, 6, 5, 4, 3, 2, and 1. The numbering of the code locations need not be successive, as long as the increments or decrements are the same. If, for example, the locations were numbered 2, 4, 6, 8, 10, 12 and 14, then the increment would be 2 in each case. However, for economy's sake, the described embodiment is preferred.

## Claims

1. A method of generating an index pulse in a data storage system having a storage surface (34), comprising recording on the storage surface an incrementing or decrementing sequence of non-zero codes, reading data from the storage surface (34), counting the number of successive non-zero codes so read, comparing non-zero codes so read with the previously read code for a match in increment or decrement, counting the number of correct matches, and initiating the generation of an index pulse when the number of successive non-zero codes reaches a pre-determined count and the number of matches exceeds a selected count lower than the pre-determined count.

2. A method as claimed in claim 1 characterised in that the sequence is a continuous incremental sequence of non-zero codes between zero code locations.

3. A method as claimed in claim 2 characterised in that there are 2ⁿ-1 non-zero codes, where n is an integer greater than one.

4. A method as claimed in claims 1, 2 or 3 characterised in that the non-zero codes are based upon the position of the code within the sequence by a binary representation of the number.

5. A method as claimed in claim 4 characterised in that the representation has redundant digits added to increase the error tolerance.

6. Apparatus for generating an index pulse in a data storage system having a storage surface (34) which carries index marks coded with an index code made of an incrementing or decrementing sequence of non-zero codes, comprising means (26) for reading data including said sequence of non-zero codes from the storage surface (34), index mark generation means (62), means (74) connected to the index mark generation means (62) for detecting said sequence, a counter (96) for counting the number of successive non-zero codes read, a comparator (98) connected to the counter (96) and to the index mark generation means (62) for comparing the output of the counter with the generated index code and for producing a match output representative of a total number of matches of non-zero codes with the counter output, counting means (110) for counting the number of correct matches, and means for generating an index pulse (120) when the number of successive non-zero codes reaches a predetermined count and the number of matches exceeds a selected count lower than the predetermined count.

7. Apparatus as claimed in claim 6, characterised in that the sequence is a continuous incremental sequence of non-zero codes between zero code locations.

8. Apparatus as claimed in claims 6 or 7, characterised in that the non-zero data is a five bit pattern given by a three bit binary representation of one to seven with additional repetition redundancy of the least two significant bits and the apparatus includes a five-to-three decoder (64) for decoding the pattern.

9. Apparatus as claimed in claim 8, characterised in that the order of the bits is rearranged to give maximum separation of the repeated bits.

10. A disk drive having an index pulse generating apparatus as claimed in any one of claims 6 to 9.

## Patentansprüche

1. Verfahren zur Erzeugung eines Indeximpulses in einem Datenspeichersystem mit einer Speicheroberfläche (34), bei dem auf der Speicheroberfläche eine schrittweise ansteigende oder absteigende Folge von von Null abweichenden Codes aufgezeichnet wird, die Daten von der Speicheroberfläche (34) gelesen werden, die Anzahl von auf diese Weise gelesenen aufeinanderfolgenden, von Null abweichenden Codes gezählt wird, die auf diese Weise gelesenen, von Null abweichenden Codes mit dem vorher gelesenen Code auf eine Übereinstimmung hinsichtlich des schrittweisen Anstiegs oder des schrittweisen Abstiegs verglichen werden, die Anzahl der richtigen Übereinstimmungen gezählt wird und die Erzeugung eines Indeximpulses eingeleitet wird, wenn die Anzahl von aufeinanderfolgenden, von Null abweichenden Codes eine vorgegebene Zählung erreicht und die Anzahl der Übereinstimmungen eine ausgewählte Zählung übersteigt, die höher als die vorgegebene Zählung ist.

2. Verfahren nach Anspruch 1,
dadurch gekennzeichnet, daß die Folge eine kontinuierliche schrittweise Folge von von Null abweichenden Codes zwischen Null-Codestellen ist.

3. Verfahren nach Anspruch 2,
dadurch gekennzeichnet, daß 2ⁿ-1 von Null abweichende Codes vorgesehen sind, wobei n eine ganze Zahl größer als Eins ist.

4. Verfahren nach Anspruch 1, 2 oder 3,
dadurch gekennzeichnet, daß die von Null abweichenden Codes auf der Position des Codes innerhalb der Folge durch eine binäre Darstellung der Zahl beruhen.

5. Verfahren nach Anspruch 4,
dadurch gekennzeichnet, daß der Darstellung redundante Ziffern hinzugefügt sind, um die Fehlertoleranz zu vergrößern.

6. Vorrichtung zur Erzeugung eines Indeximpulses in einem Datenspeichersystem mit einer Speicheroberfläche (34), die Indexmarken trägt, die mit einem Indexcode codiert sind, der aus einer schrittweisen ansteigenden oder absteigenden Folge von von Null abweichenden Codes gebildet ist, mit Einrichtungen (26) zum Lesen von Daten, unter Einschluß der Folge von von Null abweichenden Codes von der Speicheroberfläche (34) mit Indexmarken-Generatoreinrichtungen (62), mit mit den Indexmarken-Generatoreinrichtungen (62) verbundenen Einrichtungen (74) zur Feststellung der Folge, mit einem Zähler (96) zur Zählung der Anzahl der gelesenen aufeinanderfolgenden, von Null abweichenden Codes, mit einem Vergleicher (98), der mit dem Zähler (96) und den Indexmarken-Generatoreinrichtungen (62) verbunden ist, um den Ausgang des Zählers mit dem erzeugten Indexcode zu vergleichen und um einen Übereinstimmungsausgang zu erzeugen, der eine Gesamtzahl von Übereinstimmungen der von Null abweichenden Codes mit dem Zählerausgang darstellt, mit Zähleinrichtungen (110) zum Zählen der Anzahl von richtigen Übereinstimmungen, und mit Einrichtungen zur Erzeugung eines Indeximpulses (120), wenn die Anzahl der aufeinanderfolgenden, von Null abweichenden Codes eine vorgegebene Zählung erreicht und die Anzahl der Übereinstimmungen eine ausgewählte Zählung übersteigt, die niedriger als die vorgegebene Zählung ist.

7. Vorrichtung nach Anspruch 6,
dadurch gekennzeichnet, daß die Folge eine kontinuierliche schrittweise Folge von von Null abweichenden Codes zwischen Null-Codestellen ist.

8. Vorrichtung nach Anspruch 6 oder 7,
dadurch gekennzeichnet, daß die von Null abweichenden Daten ein 5-Bit-Muster sind, das durch eine binäre 3-Bit-Darstellung von 1 - 7 mit einer zusätzlichen Wiederholungsredundanz der zwei niedrigstbewerteten Bits gegeben ist, und daß die Vorrichtung einen 5-zu-3-Dekodierer 64 zur Dekodierung des Musters einschließt.

9. Vorrichtung nach Anspruch 8,
dadurch gekennzeichnet, daß die Reihenfolge der Bits neu angeordnet ist, um eine maximale Trennung der wiederholten Bits zu erzielen.

10. Plattenlaufwerk mit einer Indeximpuls-Generatorvorrichtung nach einem der Ansprüche 6 - 9.

## Revendications

1. Procédé de production d'une impulsion d'indexage dans un système de stockage de données comportant une surface de stockage (34), comprenant l'enregistrement sur la surface de stockage d'une séquence en incrémentation ou en décrémentation de codes non nuls, la lecture de données en provenance de la surface de stockage (34), le comptage du nombre de codes non nuls successifs ainsi lus, la comparaison de codes non nuls ainsi lus au code précédemment lu pour une concordance dans l'incrémentation ou la décrémentation, le comptage du nombre de concordances correctes, et l'initiation de la production d'une impulsion d'indexage lorsque le nombre de codes non nuls successifs atteint un compte prédéterminé et lorsque le nombre de concordances dépasse un compte sélectionné inférieur au compte prédéterminé.

2. Procédé selon la revendication 1, caractérisé en ce que la séquence est une séquence incrémentale continue de codes non nuls entre des emplacements de code nul.

3. Procédé selon la revendication 2, caractérisé en ce qu'il y a 2ⁿ - 1 codes non nuls, où n est un entier supérieur à un.

4. Procédé selon l'une des revendications 1, 2 ou 3, caractérisé en ce que les codes non nuls sont basés sur la position du code à l'intérieur de la séquence par une représentation binaire du nombre.

5. Procédé selon la revendication 4, caractérisé en ce que la représentation possède des chiffres redondants ajoutés pour augmenter la tolérance d'erreur.

6. Appareil pour produire une impulsion d'indexage dans un système de stockage de données comportant une surface de stockage (34) qui porte des marques d'indexage codées avec un code d'indexage fait à partir d'une séquence en incrémentation ou en décrémentation de codes non nuls, comprenant un moyen (26) pour lire des données incluant ladite séquence de codes non nuls depuis la surface de stockage (34), un moyen de production de marque d'indexage (62), un moyen (74) relié au moyen de production de marque d'indexage (62) pour détecter ladite séquence, un compteur (96) pour compter le nombre de codes non nuls successifs lus, un comparateur (98) relié au compteur (96) et au moyen de production de marque d'indexage (62) pour comparer la sortie du compteur au code d'indexage produit et pour produire une sortie de concordance représentative d'un nombre total de concordances de codes non nuls avec la sortie de compteur, un moyen de comptage (110) pour compter le nombre de concordances correctes, et un moyen pour produire une impulsion d'indexage (120) lorsque le nombre de codes non nuls successifs atteint un compte prédéterminé et lorsque le nombre de concordances dépasse un compte sélectionné inférieur au compte prédéterminé.

7. Appareil selon la revendication 6, caractérisé en ce que la séquence est une séquence incrémentale continue de codes non nuls entre des emplacements de code nul.

8. Appareil selon la revendication 6 ou 7, caractérisé en ce que les données non nulles sont une combinaison de cinq bits donnée par une représentation bits à trois bits de un à sept avec une redondance de répétition supplémentaire des deux bits les moins significatifs et en ce que l'appareil comprend un décodeur cinq-à-trois (64) pour décoder la combinaison.

9. Appareil selon la revendication 8, caractérisé en ce que l'ordre des bits est réarrangé pour donner la séparation maximale des bits répétés.

10. Lecteur de disque ayant un appareil de production d'impulsion d'indexage selon l'une quelconque des revendications 6 à 9.
